# EUROPÄISCHE PATENTSCHRIFT

(11) **EP 4 193 130 B1**
(45) Veröffentlichungstag und Bekanntmachung des Hinweises auf die Patenterteilung: **17.06.2026**
(21) Anmeldenummer: 21745795.1
(22) Anmeldetag: 16.07.2021
(51) Int. Cl.: C08K 3/22, G01F 1/58, G01F 15/14

(54) **FELDGERÄT DER AUTOMATISIERUNGSTECHNIK**
AUTOMATION FIELD DEVICE
DISPOSITIF D'AUTOMATISATION DE TERRAIN

(30) Priorität: 04.08.2020 DE 102020120592
(43) Veröffentlichungstag der Anmeldung: 14.06.2023
(73) Patentinhaber: Endress+Hauser Flowtec AG, 4153 Reinach (CH)
(72) Erfinder: SULZER, Thomas, 4058 Basel (CH); TSCHAMBSER, Florent, 68220 Hesingue (FR); DREHER, Lars, 79282 Ballrechten Dottingen (DE); WOHLGEMUTH, Werner, 4206 Seewen (CH); HUG, Timothy-James, 8472 Seuzach (CH)
(74) Vertreter: Endress + Hauser Group Services (Deutschland) AG+Co. KG
(86) Internationale Anmeldenummer: PCT/EP2021/069936
(87) Internationale Veröffentlichungsnummer: WO 2022/028854

(56) Entgegenhaltungen:
- EP-A1- 2 682 719
- EP-A2- 2 192 390
- DE-A1- 102018 129 353
- KR-A- 20120 088 536
- US-B2- 8 293 812

## Beschreibung

Die Erfindung betrifft ein Feldgerät der Automatisierungstechnik, ein Verfahren zur Herstellung eines Gehäuses des Feldgerätes der Automatisierungstechnik und eine Verwendung eines Zusatzstoffes zur Verbesserung der Haftung.

In der Automatisierungstechnik, insbesondere in der Prozess-Automatisierungstechnik, werden vielfach Feldgeräte eingesetzt, die zur Erfassung und/oder Beeinflussung von Prozessvariablen dienen. Zur Erfassung von Prozessvariablen dienen Sensoren, die beispielsweise in Füllstandsmessgeräten, Durchflussmessgeräten, Druck- und Temperaturmessgeräten, pH-Redoxpotentialmessgeräten, Leitfähigkeitsmessgeräten, usw. integriert sind, welche die entsprechenden Prozessvariablen Füllstand, Durchfluss, Druck, Temperatur, pH-Wert bzw. Leitfähigkeit erfassen. Zur Beeinflussung von Prozessvariablen dienen Aktoren, wie zum Beispiel Ventile oder Pumpen, über die der Durchfluss einer Flüssigkeit in einem Rohrleitungsabschnitt bzw. der Füllstand in einem Behältnis geändert werden kann. Als Feldgeräte werden im Prinzip alle Geräte bezeichnet, die prozessnah eingesetzt werden und die prozessrelevante Informationen liefern oder verarbeiten. Im Zusammenhang mit der Erfindung werden unter Feldgeräten also auch Remote I/Os, Funkadapter bzw. allgemein elektronische Messkomponenten verstanden, die auf der Feldebene angeordnet sind.

Ein Feldgerät ist dabei insbesondere ausgewählt aus einer Gruppe bestehend aus Durchflussmessgeräten, Füllstandsmessgeräten, Druckmessgeräten, Temperaturmessgeräten, Grenzstandsmessgeräten und/oder Analysemessgeräten.

Durchflussmessgeräte sind insbesondere Coriolis-, Ultraschall-, Vortex-, thermische und/oder magnetisch induktive Durchflussmessgeräte.

Füllstandsmessgeräte sind insbesondere Mikrowellen-Füllstandsmessgeräte, Ultraschall-Füllstandsmessgeräte, zeitbereichsreflektometrische Füllstandsmessgeräte, radiometrische Füllstandsmessgeräte, kapazitive Füllstandsmessgeräte, induktive Füllstandsmessgeräte und/oder temperatursensitive Füllstandsmessgeräte.

Druckmessgeräte sind insbesondere Absolut-,Relativ- oder Differenzdruckgeräte.

Temperaturmessgeräte sind insbesondere Messgeräte mit Thermoelementen und/oder temperaturabhängigen Widerständen.

Grenzstandsmessgeräte sind insbesondere vibronische Grenzstandsmessgeräte, Ultraschall-Grenzstandsmessgeräte und/oder kapazitive Grenzstandsmessgeräte.

Analysemessgeräte sind insbesondere pH-Sensoren, Leitfähigkeitssensoren, Sauerstoff- und Aktivsauerstoffsensoren, (spektro)-photometrische Sensoren, und/oder ionenselektive Elektroden.

Es sind vielfältige Varianten von Feldgeräten der Automatisierungstechnik bekannt, von denen die meisten Varianten ein Gehäuse zur Stabilisierung und zum Schutz der Elektronikbauteile und/oder der Messkomponenten gegenüber der Umgebung aufweisen. Feldgeräte können aufgrund des breiten Einsatzgebietes besonders hohen Temperaturschwankungen unterliegen. Dies führt zu Materialausdehnungen und - schrumpfungen innerhalb des Gehäuses, was zu Fehlmessungen oder zum Ausfall von Elektronikbauteilen führen kann.

Aus der DE 10 2012 110 665 A1 ist ein Feldgerät bekannt, das ein durch zwei miteinander verschweißte Kunststoffformteile geformtes Kunststoffgehäuse aufweist. Eine derartige Konstruktion erlaubt zwar weiterhin den Zugriff auf einzelne Messkomponenten des Durchflussmessgerätes. Sie ist jedoch nachteilig in Bezug auf die Lagefixierung der einzelnen Anschlusskabel.

Die DE 10 2014 105 569 B3 offenbart ein Feldgerät mit einem zumindest teilweise aus einem thermoplastischen Material gefertigten und somit den Messrohrteilabschnitt und mindestens eine weitere daran befestigte Messkomponente passgenau umhüllenden Gehäuse. Diese Lösung ist zwar kostengünstig, da das gesamte Gehäuse nur einen einzelnen Schrumpfschlauch umfasst, der für die Fixierung und Stabilisierung sorgt, jedoch ist nachteilig, dass das Gehäuse nach dem Aufschrumpfen nicht wiederverwertbar ist.

Aus der DE 10 347 878 A1 ist ein Feldgerät bekannt, das einen aus einem Vergussmaterial geformten und aus einem Epoxidharz oder Polyurethan bestehenden Gehäusekörper aufweist. Zur Aufbringung des Vergussmaterials wird das Messrohr mit einer Vergussform, beispielsweise aus Blech, umhüllt, welche dann mit dem Vergussmaterial gefüllt wird. Nach dem Aushärten des Vergussmaterials wird die Vergussform entfernt, wobei diese insbesondere auch wiederverwendbar ist. Dieser Erfindung nachteilig ist, dass keine ausreichende Haftung zwischen Gehäusekörper und Messrohr vorliegt, um den Anforderungen der IP68 Schutzklasse zu genügen. Das Dokument DE 10 2018 129353 A1 ist auf ein Feldgerät gerichtet, das ein Behältnis, eine Messvorrichtung und ein aus Kompositmaterial gefertigtes Gehäuse aufweist.

Der Erfindung liegt die Aufgabe zugrunde ein Feldgerät der Automatisierungstechnik bereitzustellen, mit verbesserter Haftung zwischen Behältnis und Gehäusekörper. Zudem liegt der Erfindung die Aufgabe zugrunde ein Verfahren zur Herstellung des Feldgerätes der Automatisierungstechnik bereitzustellen, mit dem eine verbesserte Haftung zwischen Behältnis und Gehäusekörper erreicht wird.

Die Aufgaben werden gelöst durch das Feldgerät nach Anspruch 1, das Verfahren zur Herstellung nach Anspruch 9 und die Verwendung eines Titantates und/oder Zirkonates nach Anspruch 15.

Das erfindungsgemäße Feldgerät der Automatisierungstechnik umfasst:
- ein Behältnis zum Aufnehmen und/oder Führen eines Mediums,
   wobei das Behältnis eine Außenfläche aufweist;
- ein Messvorrichtung zum Ermitteln einer Prozessvariablen des Mediums;
- elektronische Komponenten zum Betreiben der Messvorrichtung;
- ein Gehäuse zum Schützen des Messvorrichtung und der elektronischen Komponenten,
   wobei das Gehäuse einen Gehäusekörper aufweist,
   wobei die Messvorrichtung und die elektronischen Komponenten im Gehäuse angeordnet sind,
   wobei der Gehäusekörper an der Außenfläche des Behältnisses angeordnet ist,
   wobei der Gehäusekörper zumindest anteilig ein Kompositmaterial aufweist,
   wobei die Messvorrichtung und die elektronischen Komponenten zumindest teilweise vom Kompositmaterial umgeben sind,
   wobei das Kompositmaterial eine Polymermatrix aufweist,
   wobei das Kompositmaterial einen Zusatzstoff aufweist, welcher dazu eingerichtet ist, eine verbesserte Haftung zwischen Behältnis und Gehäusekörper herzustellen,
   wobei der Zusatzstoff mindestens eine ein oxidiertes Übergangsmetall, vorzugsweise der 4. Nebengruppe aufweisende chemische Verbindung umfasst.

Der technische Vorteil dieser erfindungsgemäßen Ausführungsform liegt darin, dass die Messkomponente sehr gut und dauerhaft ortsfest fixiert ist und gleichzeitig vor äußeren Einwirkungen wie beispielsweise Feuchte, Schmutz, Vibrationen etc. geschützt ist, wobei alle evtl. vorhandenen Hohlräume zwischen dem Messrohr und der Vergussform ausgefüllt werden. Die Fertigung ist dabei sehr kostengünstig durchführbar.

Der Zusatzstoff in der Polymermatrix bewirkt eine chemische Verbindung zwischen dem Gehäusekörper und der Oberfläche des Behältnisses. Zudem weist der Zusatzstoff katalytische Eigenschaften auf, so dass eine Aushärtetemperatur der Polymermatrix geringer gewählt werden kann. Dies führt zu einer geringeren Belastung des Behältnisses, der Messvorrichtung und der elektronischen Komponenten.

Bei der Messvorrichtung handelt es sich um die für die Ermittlung der Prozessgrößen notwendigen Bauteile. Ein Feldgerät umfasst mindestens eine Messvorrichtung. Die Messvorrichtung eines magnetisch-induktiven Durchflussmessgerätes umfasst eine Vorrichtung zum Erzeugen eines Magnetfeldes und eine Vorrichtung zum Messen einer induzierten Messspannung, d.h. Messelektroden mit den dazugehörigen Anschlüssen und Kabeln. Für die Überwachung einer weiteren Prozessgröße, der Füllstand, wird zusätzlich eine Messstoffüberwachungselektrode verwendet. Es sind magnetischinduktive Durchflussmessgeräte bekannt, die weitere Messvorrichtungen wie Temperaturfühler oder Druckmesswandler aufweisen. Die Messvorrichtung eines Ultraschalldurchflussmessgerätes umfasst mindestens einen Ultraschalltransmitter und einen Ultraschallreceiver.

Bei einem magnetisch-induktiven Durchflussmessgerät ist neben dem Einbetten der Vorrichtung zum Erzeugen des Magnetfeldes auch das Fixieren der entsprechenden elektrischen Zuleitungen und der elektronischen Komponenten, wie Betriebs-, Mess- und/oder Auswerteschaltung durch das Vergussmaterial möglich. Die Zuleitungen sind dann ohne größeren Aufwand vibrationsfrei gehalten, was die Messgenauigkeit und Störsicherheit erhöht.

Vorteilhafte Ausgestaltung der Erfindung sind Gegenstand der Unteransprüche.

Eine Ausgestaltung sieht vor, dass die Außenfläche des Behältnisses ein Polyolefin umfasst.

Polyolefine sind Polymere, die aus gesättigte Kohlenwasserstoffe, insbesondere Alkenen wie Ethylen, Propylen, 1-Buten oder Isobuten durch Kettenpolymerisation hergestellt sind. Die bekanntesten Vertreter dieser Kunststoffgruppe sind Polyethylen (PE), Polypropylen (PP) und Polymethylpenten (PMP). Industriell hergestellte und eingesetzte Polyolefine sind Polyisobutylen (PIB) und Polybutylen (PB, Polybuten-1). High-density Polyethylen (als HDPE oder PE-HD abgekürzt) wird für die Herstellung von Behältern, Benzintanks, Rohre und Haushaltswaren eingesetzt. Polypropylen (PP), vor allem isotaktisches Polypropylen, und Polyethylen (PE) wird als Verpackung im medizinischen sowie Lebensmittelbereich, für Fasern und Rohre verwendet.

Eine Ausgestaltung sieht vor, dass das Behältnis ein Polyethlenerohr (PE-Rohr) ist.

Polyethylenrohre sind aus Polyethylen (PE) hergestellte Rohre, die vor allem in Rohrleitungssystemen für die Gas-, Wasserversorgung und Abwasserentsorgung eingesetzt werden. Darüber hinaus finden sie in verschiedenen industriellen Bereichen Anwendung. Die wichtigsten Eigenschaften sind Korrosionsbeständigkeit, Beständigkeit gegenüber verschiedenen Chemikalien, Rissbeständigkeit, Trinkwasserzulassung, geringes Gewicht und einfache Verbindungstechniken. Es werden Rohrleitungen aus vernetztem Polyethylen (PEX) oder Polyethylen mit erhöhter Temperaturbeständigkeit (PE-RT) eingesetzt, die für den Dauerbetrieb mit Wasser bei 10 bar Druck und +70 °C Fluidtemperatur ausgelegt sind. Auch Mehrschichtverbundrohre aus PEX und Aluminium sind in Verwendung und fallen ebenso wie die PEX oder PE-RT Rohre unter dem Schutzumfang.

Eine Ausgestaltung sieht vor, dass die Polymermatrix mindestens eine erste Komponente und eine zweite Komponente aufweist,
wobei die erste Komponente ein Isocyanat aufweist,
wobei die zweite Komponente ein Polyol aufweist.

Es hat sich gezeigt, dass die Kombination des Zusatzstoffes mit einem Polyurethan zu einem günstigen Kompositmaterial führt, welches ideal als Gehäusekörper oder als Füllstoff zum Stabilisieren der Messvorrichtung und auch für automatisierte Abfüllprozesse geeignet ist. Zudem ergibt die Kombination zwischen Polyurethan und Zusatzstoff ein Cold-Casting System, welches ohne eine oder zumindest nur mit einer geringen thermischen Behandlung aushärtet.

Eine Ausgestaltung sieht vor, dass das Übergangsmetall ausgewählt ist aus der Gruppe die Titan oder Zirkonium umfasst.

Eine Ausgestaltung sieht vor, dass die chemische Verbindung ein Titanat und/oder ein Zirkonat aufweist.

Als Titanate werden die Salze oder Ester der Titansäuren (HₓTi_{y}O_{z}, praktisch die verschiedenen Hydrate von Titandioxid) bezeichnet. Diese liegen vorzugsweise in einem insbesondere organischen Komplex vor. Ein Zirkonat ist ein ein Oxyanion umfassendes Zirkonium. Auch diese liegt erfindungsgemäß vorzugsweise in einem insbesondere organischen Komplex vor.

Eine Ausgestaltung sieht vor, dass die chemische Verbindung eine Isopropyl- und/oder eine Tri(dioctyl)Phosphatkette aufweist.

Als besonders vorteilhaft hat sich der Einsatz von Isopropyl-Triisostearoyl-Titanat, Isopropyl-Tri(dioctyl)phosphat-Titanat, Isopropyl-Tri(N-Ethylendiamino)Ethyl-Titanat und/oder Neopentyl(Diallyl)Oxy-Tri(dioctyl)phosphat-Zirkonat erwiesen, deren Strukturformeln sich wie folgt darstellenl lassen: 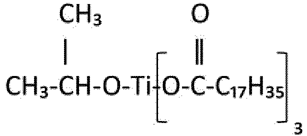
Isopropyl-Triisostearoyl-Titanat 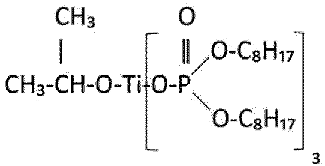
Isopropyl-Tri(dioctyl)phosphat- Titanat 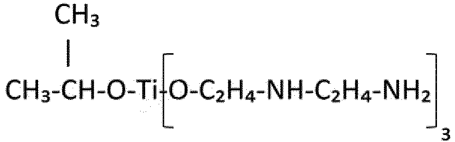
Isopropyl-Tri(N-Ethylendiamino)Ethyl-Titanat 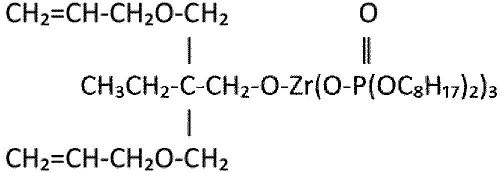
Neopentyl(Diallyl)Oxy-Tri(dioctyl)phosphat-Zirkonat

So zeigte die Verwendung der gelisteten Zusatzstoffe eine besonders gute Haftung zwischen Gehäusekörper und Behältnissen, welche eine unbehandelten Außenflächen - d.h. bei denen die äußere Oxidschicht nicht entfernt wurde - aufweisen.

Eine Ausgestaltung sieht vor, dass das Feldgerät ein Durchflussmessgerät ist, insbesondere ein magnetisch-induktives Durchflussmessgerät.

Das erfindungsgemäße Verfahren zur Herstellung eines Gehäuses für ein Feldgerät, insbesondere eines erfindungsgemäßen Feldgerätes umfasst die Verfahrensschritte:
- Einarbeiten eines Zusatzstoffes zum Verbessern der Haftung zwischen Behältnis und Gehäusekörper des Gehäuses in eine erste Komponente oder eine zweite Komponente, vorzugsweise in die zweite Komponente eines Vergussmaterials,
   wobei die erste Komponente ein Isocyanat aufweist,
   wobei die zweite Komponente ein Polyol aufweist,
   wobei der Zusatzstoff zumindest eine ein oxidiertes Übergangsmetall, vorzugsweise der 4. Nebengruppe aufweisende chemische Verbindung umfasst;
- Mischen der einzelnen Komponenten zur Bildung des Vergussmaterials;
- Vergießen des Vergussmaterials in eine Vergussform,
   wobei die Vergussform an eine Außenfläche eines Behältnisses angeordnet ist; und
- Aushärten lassen des Vergussmaterials zur Bildung des Kompositmaterials bei einer Aushärtetemperatur.

Es hat sich gezeigt, dass ein Beimischen des Zusatzstoffes in die erste Komponente, also in das Isocyanat zu einer unangenehmen Geruchsbildung führt. Dies Problem lässt sich durch das Zumischen des Zusatzstoffes in die zweite Komponente lösen.

Das Vorsehen eines Zusatzstoffes mit einer ein oxidiertes Übergangsmetall aufweisenden chemischen Verbindung führt zu chemischen Verbindungen zwischen der Polymermatrix und der Außenfläche des Behältnisses und somit zu einer besseren Haftung. Weiterhin fördert der Zusatzstoff die Reaktion zwischen der ersten Komponente und der zweiten Komponente, so dass auf eine Aufheizen des Kompositmaterials beim Bilden des Gehäusekörpers teilweise oder sogar ganz verzichtet werden kann. Somit bildet das Kompositmaterial ein sogenanntes Cold-Casting System.

Vorteilhafte Ausgestaltung der Erfindung sind Gegenstand der Unteransprüche.

Eine Ausgestaltung sieht vor, dass die Aushärtetemperatur kleiner 50°C, insbesondere kleiner 40°C und bevorzugt kleiner 30°C ist.

Vorteilhaft an der Ausgestaltung ist, dass die Bearbeitung des Gehäusekörpers bei geringeren Temperaturen erfolgen kann. Zudem kann mit der Weiterverarbeitung des Feldgerätes der Automatisierungstechnik früher begonnen werden, da die finale Aushärtung auch im Folgenden bei Raumtemperatur erreicht wird.

Eine Ausgestaltung sieht vor, dass der Zusatzstoff in einem Gewichtsverhältnis von mindestens 0,3%, insbesondere maximal 1% und bevorzugt 0,4 bis 0,5% in der zweiten Komponente vorliegt.

Eine Ausgestaltung sieht vor, dass die Außenfläche des Behältnisses an einer für das Gehäuse vorgesehenen Position oxidiert ist.

Üblicherweise werden die PE-Rohre vor dem Weiterverarbeiten - z.B. Verschweißen mit zweitem PE-Rohr - durch entsprechende Vorbehandlungsverfahren wie Reinigen, (Sand-)Strahlen, Beflammen und/oder Plasmabeschichten mit anschließendem Primern eine mechanische Adhäsion behandelt. Eine sogenannte "Oxidschicht" des PE-Rohres muss abgeschält werden, da ansonsten eine ausreichende Haftung nicht gewährleistet werden kann. Dies ist aber für eine Massenproduktion von Feldgeräten oder für gekrümmte Behältnisaußenflächen extrem nachteilig oder gar hinderlich. Durch die Verwendung des obigen Zusatzstoffes kann auf das Entfernen der Oxidschicht verzichtet werden. Wird auf das Entfernen der Oxidschicht verzichtet, so bleibt die Außenfläche an einer für das Gehäuse vorgesehenen Position somit oxidiert.

Eine Ausgestaltung sieht vor, dass das Übergangsmetall ausgewählt ist aus der Gruppe die Titan oder Zirkonium umfasst.

Titan oder Zirkonium im Zusatzstoff weisen besonders gute katalytische Eigenschaften auf und fördern bzw. initiieren eine chemische Reaktion zwischen der Außenfläche des Behältnisses und der Polymermatrix. Es konnte gezeigt werden, dass die chemische Reaktion selbst bei oxidierten PE-Rohres erfolgt.

Eine Ausgestaltung sieht vor, dass die chemische Verbindung ein Titanat und/oder ein Zirkonat aufweist, und/oder
wobei die chemische Verbindung eine Isopopyl- und/oder eine Tri(dioctyl)Phosphatkette aufweist.

Erfindungsgemäß wird ein ein Titanate und/oder Zirconate aufweisender Zusatzstoff zur Verbesserung der Haftung eines aus einem Polyurethan gebildeten Gehäusekörpers auf einem Behältnis verwendet.

Gemäß einer Ausgestaltung weist der Gehäusekörper eine Shore-Härte von mindestens 60D, insbesondere von mindestens 70D und bevorzugt von mindestens 85D (nach ISO 868 (Stand 2003)) aufweist.

Die Shore-Härte beschreibt den mechanischen Widerstand, den das Vergussmaterial einem mechanischen Eindringen eines anderen Körpers entgegensetzt und hängt nur bedingt von der Festigkeit des Körpers ab. Die Shore-Härte ist ein Werkstoffkennwert für Elastomere und Kunststoffe und ist in den Normen DIN EN ISO 868, DIN ISO 7619-1 und ASTM D2240-00 (Stand 2018) festgelegt.

Gemäß einer Ausgestaltung erfüllt das Gehäuse (7) die Anforderungen der IP68 Schutzklasse (Stand 2020) erfüllt.

Die erste Kennziffer bedeutet nach der DIN EN 60529 (Stand 2020), dass das Gehäuse staubdicht ist und somit gegen das Eindringen von Fremdkörpern geschützt ist. Die zweite Kennziffer bedeutet nach der DIN EN 60529, dass das Innere des Gehäuses trotz dauerndes Untertauchen gegen Eindringen von Wasser geschützt ist.

Die IP-Schutzklasse gibt die Widerstandsfähigkeit des Gehäuse eines Feldgerätes gegen das Eindringen von Fremdkörpern und Wasser an. Die beiden Zahlen der Schutzklasse haben folgende Bedeutung. Die erste Zahl gibt an, wie resistent das Gehäuse gegen das Eindringen von Fremdkörpern ist. Die zweite Zahl gibt die Dichtheit gegenüber Wasser an. Ein Gehäuse, das die Anforderung der IP68 Schutzklasse (Stand 2020) erfüllt, ist somit staubdicht und gegen dauerhaftes Eintauchen in Wasser geschützt.

Gemäß einer Ausgestaltung führt die durch die Reaktion der ersten mit der zweiten Komponente freiwerdende Reaktionswärme zu einem Temperaturanstieg des Kompositmaterials an einer Grenzfläche zu der Messkomponente oder zu dem Behältnis von kleiner 100°C, insbesondere kleiner 70°C und bevorzugt kleiner 30°C.

Beim Vergießen von Elektronikbauteilen mit miteinander reagierende und einen Schaumstoff bildenden Komponenten ist es besonders wichtig, dass es durch die freiwerdende Reaktionswärme nicht zu einer Beschädigung der Elektronikbauteile und/oder der Messkomponenten kommt. Das ist insbesondere dann wichtig, wenn in den Elektronikbauteilen oder in den Messkomponenten Kunststoffteile, beispielsweise in Form von Isolierungen, verbaut sind oder wenn wärmeempfindliche Elektronikbauteile verbaut sein. Eine Abstimmung der beiden Komponenten und der bei der chemischen Reaktion freiwerdenden Wärme ist daher essentiell. Um Schäden an den Messkomponenten zu vermeiden, können einerseits die Umgebungsbedingungen so kontrolliert werden, dass die freigesetzte Reaktionswärme kontinuierlich abgeführt wird und das Kompositmaterial somit einen Temperaturanstieg bzw. eine Temperaturänderung von 100°, 70° oder 30°C nicht übersteigt. Dies erfolgt beispielsweise dadurch, dass die Reaktion in einer heruntergekühlten Umgebung erfolgt oder dadurch dass die freigesetzte Wärme mit einem fließenden Medium, wie z.B. Stickstoff abgeleitet wird.

Andererseits kann die Reaktionswärme bereits durch die Abstimmung der ersten und zweiten Komponente beeinflusst werden. Erfindungsgemäß wird eine erste Komponente mit einem Isocyanat und eine zweite Komponente mit einem Polyol gewählt. In dem Fall ist die freigesetzte Reaktionswärme so gering, dass der Temperaturanstieg unterhalb der oben genannten kritischen Temperaturänderung bleibt.

Bei den für die Herstellung des Gehäuses verwendeten Polyurethanen handelt es sich zumeist um elastomere Kunststoffe, die auf Basis eines unmittelbar vor der Verarbeitung aus reaktiven Komponenten gebildeten, flüssigen Mehrkomponentensystems hergestellt sind, wobei letzteres jeweils nach dem Zusammenmischen in die Vergussform eingebracht und dort innerhalb einer vorgebbaren Reaktionszeit aushärten gelassen wird. Polyurethane werden bekanntlich nach dem Polyadditionsverfahren aus Di- und PolyIsocyanaten mit mehrwertigen Alkoholen hergestellt. Als Komponenten können dabei beispielsweise Präpolymere, aufgebaut aus aliphatischen und/oder aromatischen EtherGruppen sowie Glykol und Isocyanat-Gruppen dienen, die mit dem zugeführten mehrwertigen Alkohol reagieren können.

Üblicherweise werden Transmitter oder elektronische Anzeige über einen Adapter mit dem Gehäuse verbunden. Daher müssen für Messrohre mit unterschiedlichen Rohrdurchmesser jeweilige Adapter angefertigt und bereitgestellt werden. Erfindungsgemäß ist die Vergussform derart geformt, dass der Adapter, insbesondere die Anschlüsse passend mitvergossen werden. Außerdem ist es von Vorteil, wenn die Vergussform auch stellenweise die Form des Adapters annimmt, was dazu führt, dass sich nach dem Vergießen ein Adapter mit ausbildet. Dessen Form hängt von der Form der Vergussform ab und kann somit für die jeweiligen Messrohre angepasst werden. Somit kann auf einen zusätzlichen Adapter verzichtet werden und der Transmitter oder die elektronische Anzeige kann direkt an das erhärtete Vergussmaterial angeschlossen werden.

Bei der Vergussform können idealerweise herkömmlich, beispielsweise aus der DE 10 2012 110 665 A1 bekannte Gehäuseschalen zurückgegriffen werden. Für ein einfaches Ablösen des Vergussform von dem Vergussmaterial weist die Innenseite der Vergussform eine anti-adhäsive Oberfläche auf, bzw. besteht die Vergussform aus einem antiadhäsiven Material. Besonders vorteilhaft ist eine Beschichtung mit einem Fett oder Teflon. Üblicherweise wird die Vergussform mit Hilfe eines Druckgussverfahrens hergestellt. Erfindungsgemäß ist die Vergussform mittels einem 3D-Druckverfahren hergestellt. Die Verschalung kann beispielsweise aus Blech oder Kunststoff hergestellt sein, insbesondere wiederverwendbar oder als "verlorene Form" ausgeführt sein.

Weiterhin weist die Vergussform einen Zulauf auf, damit das aufschäumende Vergussmaterial vereinfacht in die Vergussform eingeführt werden kann.

Komponenten zur Bildung eines Kompositmaterials aus einem Vergussmaterial liegen in der Regel nicht in einem homogenisierten Zustand vor. Für eine ideale Reaktionsbedingung muss die jeweilige Komponente jedoch homogen in dem Vergussmaterial verteilt sein. Nur dann kann die Bildung von Hohlräumen und das Ablösen von der Außenfläche des Behältnisses vermieden werden.

Die Erfindung wird anhand der nachfolgenden Figuren näher erläutert. Es zeigt:
Fig. 1: einen Querschnittsdarstellung eines magnetisch-induktiven Durchflussmessgerätes nach dem Stand der Technik;
Fig. 2: eine perspektivische Ansicht auf eine Ausgestaltung des Feldgerätes der Automatisierungstechnik;
Fig. 3: eine seitliche Ansicht auf eine weitere Ausgestaltung des Feldgerätes der Automatisierungstechnik; und
Fig. 4: ein Flussdiagramm zur Beschreibung des Ablaufes eines Verfahrens zur Herstellung des erfindungsgemäßen Feldgerätes.

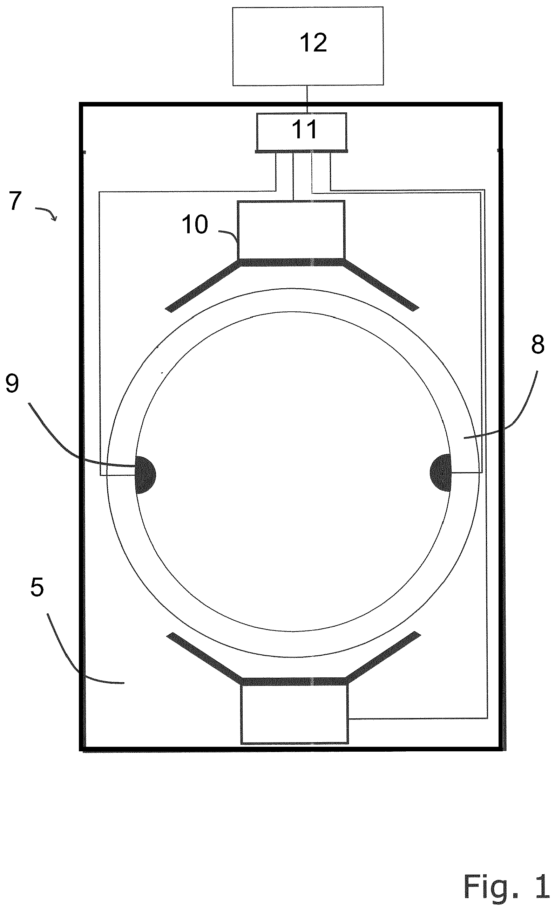

Ein Beispiel für ein Feldgerät der Automatisierungstechnik ist ein magnetisch-induktives Durchflussmessgerät 7 (siehe Fig. 1). Der Aufbau und das Messprinzip des magnetisch-induktiven Durchflussmessgerätes 7 ist grundsätzlich bekannt. Durch ein Messrohr 8 wird ein fließfähiges Medium geleitet, welches eine elektrische Leitfähigkeit aufweist. Eine Vorrichtung 10 zum Erzeugen eines Magnetfeldes ist so am Messrohr 8 angebracht, dass sich die Magnetfeldlinien senkrecht zu einer durch die Messrohrachse definierten Längsrichtung orientieren. Als Vorrichtung 10 zum Erzeugen des Magnetfeldes eignet sich vorzugsweise eine Sattelspule oder ein Polschuh mit aufgesetzter Spule. Zusätzlich kann die Vorrichtung 10 zum Erzeugen des Magnetfeldes Feldführungskörper aufweisen. Bei angelegtem Magnetfeld entsteht im Messrohr 8 eine Potentialverteilung, die mit einer Vorrichtung 9 zum Messen einer induzierten Messspannung, in dem Fall mit zwei an der Innenwand des Messrohres 8 angebrachten Messelektroden abgegriffen wird. In der Regel sind diese diametral angeordnet und bilden eine Elektrodenachse, die senkrecht zu einer Symmetrieachse der Magnetfeldlinien und der Längsachse des Rohres verläuft. Anhand der gemessenen induzierten Messspannung kann, unter Berücksichtigung der magnetischen Flussdichte, die Durchflussgeschwindigkeit und, unter Berücksichtigung der Rohrquerschnittsfläche, der Volumendurchfluss des Mediums bestimmt werden. Um das Ableiten der an den Messelektroden anliegenden Messspannung über das Trägerrrohr des Messrohres 8 zu verhindern, wird die Innenfläche des Trägerrohres mit einem isolierenden Material bzw. einem Kunststoff-Liner ausgekleidet. Das durch beispielsweise einen Elektromagneten aufgebaute Magnetfeld wird durch einen getakteten Gleichstrom wechselnder Polarität mittels einer Betriebsschaltung 11 erzeugt. Dies gewährleistet einen stabilen Nullpunkt und macht die Messung unempfindlich gegenüber Einflüssen durch Mehrphasenstoffe, Inhomogenitäten in der Flüssigkeit oder geringer Leitfähigkeit. Eine Mess- und/oder Auswerteschaltung 11 liest die an den Messelektroden anliegende Messspannung aus und ermittelt die Durchflussgeschwindigkeit und/oder den errechneten Volumendurchfluss des Mediums. Bei dem in Fig. 1 dargestellten Querschnitt des magnetisch-induktiven Durchflussmessgerät befinden sich die Messelektroden in direktem Kontakt mit dem Medium. Die Kopplung kann jedoch auch kapazitiv erfolgen. Die Messvorrichtung und die elektronischen Komponenten des magnetisch-induktiven Durchflussmessgerätes sind üblicherweise durch ein Gehäuse vor äußeren Einflüssen geschützt. Ein aus einem flüssig applizierten und ausgehärteten Vergussmaterial gebildeter Gehäusekörper dient zur Stabilisierung der Messanordnung - in dem Fall der Vorrichtung 10 zum Erzeugen des Magnetfeldes und der Vorrichtung 9 zum Messen der induzierten Messspannung - und der elektronischen Komponenten - die Betriebs-, Mess- und/oder Auswerteschaltung 11 - gegen mechanische und thermische Einflüsse.

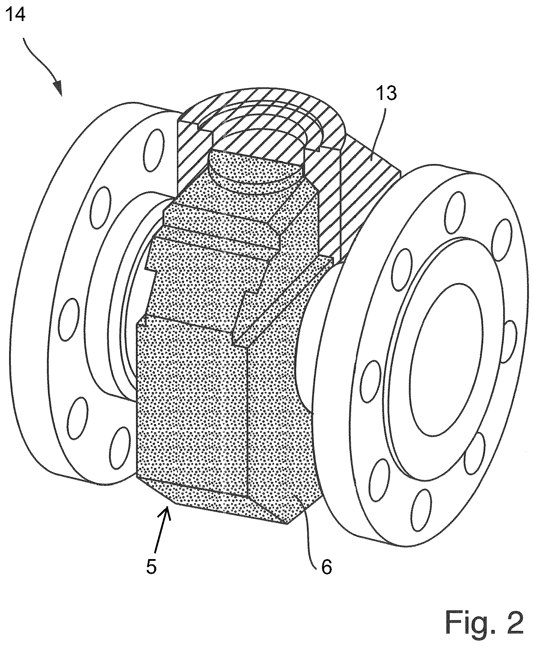

Die Fig. 2 zeigt eine Perspektivansicht einer Ausgestaltung eines zumindest teilweise verschalten Feldgerätes der Automatisierungstechnik 14. Als Vergussform 13 wurde eine herkömmliche Gehäuseschale verwendet, die einen Hohlraum zwischen Gehäuseschalungwandung und Außenfläche des Behältnisses ausbildet und bei Feldgeräten zum Schutz der Elektronikbauteile verbaut wird, in denen ein nachträglicher Zugriff auf das Innere des Gehäuses 5 vorgesehen ist. Sie kann jede beliebige Form annehmen. Bei speziellen Formwünschen eignet sich ein 3D-Druckverfahren. Nach dem Befüllen des durch die Vergussform 13 gebildeten Hohlraumes mit einem Vergussmaterial kann die Vergussform 13 wieder entfernt werden, so dass sie für die Herstellung weiterer Gehäusekörper 6 verwendet werden kann. In der Fig. 2 nicht sichtbar ist ein im Gehäuskörper 6, insbesondere in der Polymermatrix eingebetteter Transmitter, der die Messsignale an eine Anzeigeeinheit sendet. Die Polymermatrix weist zumindest anteilig ein Kompositmaterial auf, welches die Messvorrichtung und die elektronischen Komponenten zumindest teilweise umgibt. Das Kompositmaterial weist eine Polymermatrix und einen Zusatzstoff auf, wobei der Zusatzstoff mindestens eine ein oxidiertes Übergangsmetall, vorzugsweise der 4. Nebengruppe aufweisende chemische Verbindung umfasst. Der Zusatzstoff dient dazu eine verbesserte Haftung zwischen Außenfläche des Behältnisses und dem Gehäusekörper 6 zu formen. Nach dem Vergießen wird die Vergussform entfernt und der Gehäusekörper 6 aus dem Polymerkomposit übernimmt die Funktion der Verschalung. Alternativ wird die Vergussform 13 nicht entfernt. In dem Fall sorgt die Polymermatrix hauptsächlich für die Fixierung der elektronischen Komponenten. Die äußere Gehäuseverschalung übernimmt die Stabilisierung und den Schutz der Messkomponenten. Bei dem Behältnis handelt es sich um ein metallisches Messrohr mit Flanschanschlüssen.

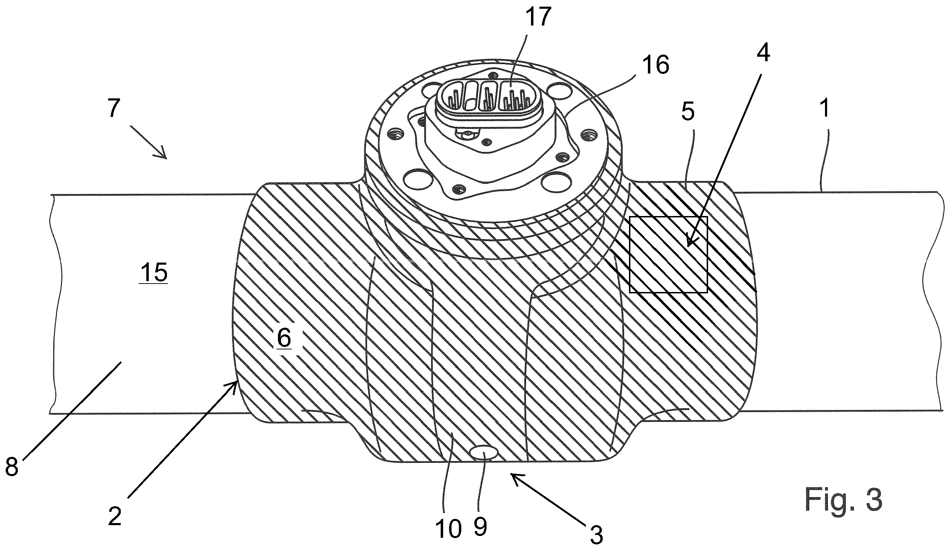

Die Fig. 3 zeigt eine Seitenansicht einer weiteren Ausgestaltung eines magnetisch-induktiven Durchflussmessgerätes 7 mit einem vergossenen Adapter 16. Dieser wird beim Vergießen des Vergussmaterials so in die Vergussform eingebracht, dass die Anschlüsse 17 freibleiben und nur das Endstück mit dem Vergussmaterial umschlossen wird. In der abgebildeten Ausgestaltung ist der Adapter 16 als separates Bauteil mitvergossen. Der Adapter 16 muss aber nicht notwendigerweise als separates Bauteil ausgebildet sein. Durch die Wahl der Vergussform kann der Gehäusekörper 5 bzw. Teile des Gehäusekörpers die Form des Adapters 16 annehmen. In diesem Fall werden die elektrischen Anschlüsse 17 während des Vergießens des Vergussmaterials mit in die Vergussform fixiert und so vergossen, dass die Kontaktstellen der Anschlüsse 17 nicht mitvergossen werden. Die Anzeigeeinheit kann dann direkt an den Gehäusekörper 6 angeschlossen werden, ein Adapter als separetes Bauteil ist somit nicht notwendig.

Das magnetisch-induktives Durchflussmessgerät 7 weist ein Behältnis 1 auf, wobei es sich bei dem Behältnis 1 um ein Messrohr 8 mit einem PE-Rohr als Trägerrohr 15 handelt. An der Außenfläche 2 des Messrohres 8 ist ein Gehäuse 5 mit einem Gehäusekörper 6 angeordnet. Der Gehäusekörper 6 weist zumindest anteilig ein Kompositmaterial auf. Die Messvorrichtung 3 und die elektronischen Komponenten 4 des magnetisch-induktiven Durchflussmessgerätes 7 sind zumindest teilweise vom Kompositmaterial umgeben. Bei dem Kompositmaterial handelt es sich um eine Polymermatrix, in die ein Zusatzstoff eingebettet ist. Dieser dient dazu, die Haftung zwischen Gehäusekörper 6 und Außenfläche 2 des Messrohres 8 zu verbessern, um die Anforderung der IP68 Schutzklasse zu erfüllen. Bei dem Zusatzstoff handelt es sich um eine ein oxidiertes Übergangsmetall, vorzugsweise der 4. Nebengruppe aufweisende umfassende chemische Verbindung. Besonders gute Ergebnisse wurden mit einem ein Titanat aufweisenden Zusatzstoff erzielt. Bei der Polymermatrix handelt es sich um ein aus einem zweikomponentigen System gebildetes Polyurethanpolymer.

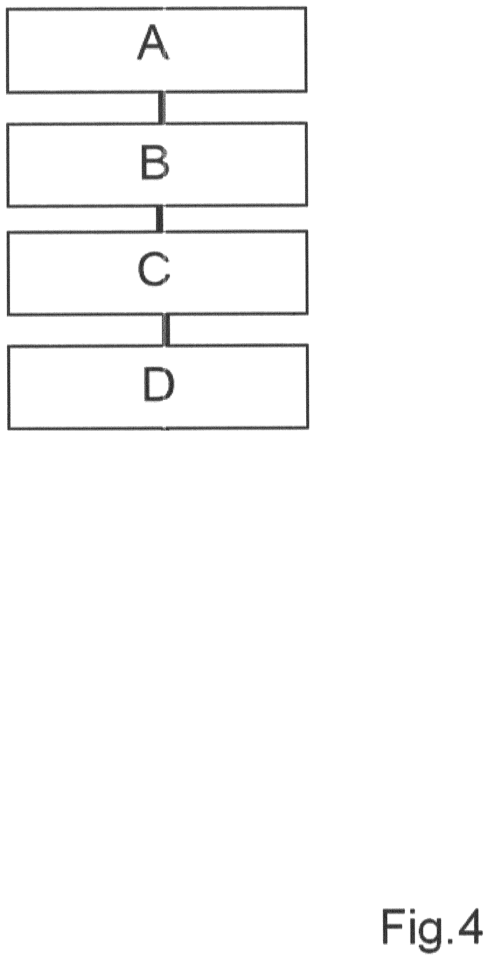

Die Fig. 4 zeigt ein Flussdiagramm zur Beschreibung des Ablaufes eines Verfahrens zur Herstellung des erfindungsgemäßen Feldgerätes. Das Verfahren umfasst die Verfahrensschritte A bis D:
A) Einarbeiten eines Zusatzstoffes in eine zweite Komponente eines zweikomponentigen Vergussmaterials.

Das Vergussmaterial ist ein Zwei-Komponenten-System, kann jedoch auch weitere Zusatzstoffe wie Füllstoffe oder Farbstoffe aufweisen. Die erste Komponente weist ein Isocyanat auf und die zweite Komponente weist ein Polyol auf. Der Zusatzstoff ist eine ein oxidiertes Übergangsmetall aufweisende chemische Verbindung. Bei dem Übergangsmetall handelt es sich um ein Titan und/oder ein Zirkonium. Insbesondere liegt das Übergangsmetall in Form eines Titanates und/oder eines Zirkonates vor. Zudem weist der Zusatzstoff eine chemische Verbindung mit einer Isopopyl- und/oder einer Tri(dioctyl)Phosphatkette auf.

B) Mischen der einzelnen Komponenten zur Bildung des Vergussmaterials.

C) Vergießen des Vergussmaterials in eine Vergussform.

Dabei ist die Vergussform an eine Außenfläche eines Behältnisses angeordnet, welches mit einem Gehäuse zu versehen ist. In der vorliegenden Ausgestaltung handelt es sich bei dem Behältnis um ein Polyethylenrohr, kurz PE-Rohr, welches vor allem in Rohrleitungssystemen für die Gas-, Wasserversorgung und Abwasserentsorgung eingesetzt wird und mit einer Trinkwasserzulassung versehen sein kann.

D) Aushärten lassen des Vergussmaterials zur Bildung des Kompositmaterials bei einer Aushärtetemperatur.

Da es sich beim vorliegenden Vergussmaterial um einen Cold-Casting Verguss handelt kann die Aushärtetemperatur kleiner 50°C, insbesondere kleiner 40°C und bevorzugt kleiner 30°C gewählt werden. Da das Vergussmaterial auch bei Aushärtetemperaturen von kleiner 30°C bereits nach ein paar Stunden - obwohl die zu erzielende Shore-Härte noch nicht erreicht wird - bereit für die Weiterverarbeitung ist, ist ein Aushärtenlassen des Vergussmaterials selbst bei Raumtemperatur möglich. Der Zusatzstoff liegt in einem Gewichtsverhältnis von mindestens 0,3%, insbesondere maximal 1% und bevorzugt 0,4 bis 0,5% in der zweiten Komponente vor.

Auf einen zusätzlichen Verfahrensschritt, bei dem die Außenfläche des Behältnisses behandelt wird kann verzichtet werden.

**Bezugszeichenliste**

| | |
|---|---|
| Behältnis | 1 |
| Außenfläche | 2 |
| Messvorrichtung | 3 |
| elektronische Komponenten | 4 |
| Gehäuse | 5 |
| Gehäusekörper | 6 |
| magnetisch-induktives Durchflussmessgerät | 7 |
| Messrohr | 8 |
| Vorrichtung zum Messen einer induzierten Messspannung | 9 |
| Vorrichtung zum Erzeugen des Magnetfeldes | 10 |
| Betriebs-, Mess- und/oder Auswerteschaltung | 11 |
| Anzeigevorrichtung | 12 |
| Vergussform | 13 |
| Feldgerät der Automatisierungstechnik | 14 |
| Trägerrohr | 15 |
| Adapter | 16 |
| Anschlüsse | 17 |

## Patentansprüche

1. Feldgerät der Automatisierungstechnik, umfassend:
- ein Behältnis (1) zum Aufnehmen und/oder Führen eines Mediums,
wobei das Behältnis (1) eine Außenfläche (2) aufweist;
- ein Messvorrichtung (3) zum Ermitteln einer Prozessvariablen des Mediums;
- elektronische Komponenten (4) zum Betreiben der Messvorrichtung (3);
- ein Gehäuse (5) zum Schützen des Messvorrichtung (3) und der elektronischen Komponenten (4),
wobei das Gehäuse (5) einen Gehäusekörper (6) aufweist,
wobei die Messvorrichtung (3) und die elektronischen Komponenten (4) im Gehäuse (5) angeordnet sind,
wobei der Gehäusekörper (6) an der Außenfläche (2) angeordnet ist,
wobei der Gehäusekörper (6) zumindest anteilig ein Kompositmaterial aufweist,
wobei die Messvorrichtung (3) und die elektronischen Komponenten (4) zumindest teilweise vom Kompositmaterial umgeben sind,
wobei das Kompositmaterial eine Polymermatrix aufweist,
wobei das Kompositmaterial einen Zusatzstoff aufweist, welcher dazu eingerichtet ist, eine verbesserte Haftung zwischen Behältnis (1) und Gehäusekörper (6) herzustellen,
wobei der Zusatzstoff mindestens eine ein oxidiertes Übergangsmetall, vorzugsweise der 4. Nebengruppe aufweisende chemische Verbindung umfasst.

2. Feldgerät nach Anspruch 1,
wobei die Außenfläche (2) ein Polyolefin umfasst.

3. Feldgerät nach Anspruch 1 und/oder 2,
wobei das Behältnis (1) ein PE-Rohr ist.

4. Feldgerät nach mindestens einem der vorhergehenden Ansprüche,
wobei die Polymermatrix mindestens eine erste Komponente und eine zweite Komponente aufweist,
wobei die erste Komponente ein Isocyanat aufweist,
wobei die zweite Komponente ein Polyol aufweist.

5. Feldgerät nach mindestens einem der vorhergehenden Ansprüche,
wobei das Übergangsmetall ausgewählt ist aus der Gruppe, die Titan und/oder Zirkonium umfasst.

6. Feldgerät nach mindestens einem der vorhergehenden Ansprüche,
wobei die chemische Verbindung ein Titanat und/oder ein Zirkonat aufweist.

7. Feldgerät nach Anspruch 6,
wobei die chemische Verbindung eine Isopropyl- und/oder eine Tri(dioctyl)Phosphatkette aufweist.

8. Feldgerät nach mindestens einem der vorhergehenden Ansprüche,
wobei das Feldgerät ein Durchflussmessgerät ist, insbesondere ein magnetisch-induktives Durchflussmessgerät.

9. Verfahren zur Herstellung eines Gehäuses (5) für ein Feldgerät, insbesondere ein Feldgerätes nach mindestens einem der vorhergehenden Ansprüche, umfassend die Verfahrensschritte:
- Einarbeiten eines Zusatzstoffes zum Verbessern der Haftung zwischen Behältnis (1) und Gehäusekörper (6) des Gehäuses (5) in eine erste Komponente oder eine zweite Komponente, vorzugsweise in die zweite Komponente eines Vergussmaterials,
wobei die erste Komponente ein Isocyanat aufweist,
wobei die zweite Komponente ein Polyol aufweist,
wobei der Zusatzstoff eine ein oxidiertes Übergangsmetall, vorzugsweise der 4. Nebengruppe aufweisende chemische Verbindung umfasst;
- Mischen der einzelnen Komponenten zur Bildung des Vergussmaterials;
- Vergießen des Vergussmaterials in eine Vergussform,
wobei die Vergussform an eine Außenfläche (2) des Behältnisses (1) angeordnet ist; und
- Aushärten lassen des Vergussmaterials zur Bildung des Kompositmaterials bei einer Aushärtetemperatur.

10. Verfahren nach Anspruch 9,
wobei die Aushärtetemperatur kleiner 50°C, insbesondere kleiner 40°C und bevorzugt kleiner 30°C ist.

11. Verfahren nach Anspruch 9 und/oder 10,
wobei der Zusatzstoff in einem Gewichtsverhältnis von mindestens 0,3%, insbesondere maximal 1% und bevorzugt 0,4 bis 0,5% in der zweiten Komponente vorliegt.

12. Verfahren nach Anspruch 9 bis 11,
wobei die Außenfläche (2) an einer für das Gehäuse (5) vorgesehenen Position oxidiert ist.

13. Verfahren nach mindestens einem der Ansprüche 9 bis 12,
wobei das Übergangsmetall ausgewählt ist aus der Gruppe die Titan oder Zirkonium umfasst.

14. Verfahren nach mindestens einem der Ansprüche 9 bis 13,
wobei der Zusatzstoff ein Titanat und/oder ein Zirkonat aufweist, und/oder
wobei der Zusatzstoff eine chemische Verbindung mit einer Isopopyl- und/oder einer Tri(dioctyl)Phosphatkette aufweist.

15. Verwendung von einem ein Titanat und/oder ein Zirkonat aufweisenden Zusatzstoff zur Verbesserung der Haftung eines aus einem Polyurethan gebildeten Gehäusekörpers (6) auf einem Behältnis (1).

## Claims

1. Field device of automation technology, comprising:
• a container (1) for receiving and/or guiding a medium,
wherein the container (1) has an outer surface (2);
• a measuring device (3) for determining a process variable of the medium;
• electronic components (4) for operating the measuring device (3);
• a housing (5) for protecting the measuring device (3) and the electronic components (4),
wherein the housing (5) has a housing body (6),
wherein the measuring device (3) and the electronic components (4) are arranged in the housing (5),
wherein the housing body (6) is arranged on the outer surface (2),
wherein the housing body (6) at least partially comprises a composite material,
wherein the measuring device (3) and the electronic components (4) are at least partially surrounded by the composite material,
wherein the composite material comprises a polymer matrix,
wherein the composite material comprises an additive which is designed to establish improved adhesion between the container (1) and the housing body (6),
wherein the additive comprises at least one chemical compound containing an oxidized transition metal, preferably of group 4 of the periodic table.

2. Field device according to claim 1,
wherein the outer surface (2) comprises a polyolefin.

3. Field device according to claim 1 and/or 2,
wherein the container (1) is a PE pipe.

4. Field device according to at least one of the preceding claims,
wherein the polymer matrix comprises at least a first component and a second component,
wherein the first component comprises an isocyanate,
wherein the second component comprises a polyol.

5. Field device according to at least one of the preceding claims,
wherein the transition metal is selected from the group comprising titanium and/or zirconium.

6. Field device according to at least one of the preceding claims,
wherein the chemical compound comprises a titanate and/or a zirconate.

7. Field device according to claim 6,
wherein the chemical compound comprises an isopropyl and/or a tri(dioctyl) phosphate chain.

8. Field device according to at least one of the preceding claims,
wherein the field device is a flow meter, in particular a magnetic-inductive flow meter.

9. Method for producing a housing (5) for a field device, in particular a field device according to at least one of the preceding claims, comprising the method steps:
• incorporating an additive for improving the adhesion between the container (1) and the housing body (6) of the housing (5) into a first component or a second component, preferably into the second component of a casting material,
wherein the first component comprises an isocyanate,
wherein the second component comprises a polyol,
wherein the additive comprises a chemical compound containing an oxidized transition metal, preferably of group 4 of the periodic table;
• mixing the individual components to form the casting material;
• casting the casting material into a casting mold,
wherein the casting mold is arranged on an outer surface (2) of the container (1); and
• allowing the casting material to cure to form the composite material at a curing temperature.

10. Method according to claim 9,
wherein the curing temperature is less than 50 °C, in particular less than 40 °C and preferably less than 30 °C.

11. Method according to claim 9 and/or 10,
wherein the additive is present in the second component in a weight ratio of at least 0.3%, in particular at most 1% and preferably 0.4 to 0.5%.

12. Method according to claims 9 to 11,
wherein the outer surface (2) is oxidized at a position intended for the housing (5).

13. Method according to at least one of claims 9 to 12,
wherein the transition metal is selected from the group comprising titanium or zirconium.

14. Method according to at least one of claims 9 to 13,
wherein the additive comprises a titanate and/or a zirconate, and/or
wherein the additive comprises a chemical compound having an isopropyl and/or a tri(dioctyl) phosphate chain.

15. Use of an additive comprising a titanate and/or a zirconate for improving the adhesion of a housing body (6) formed from polyurethane on a container (1).

## Revendications

1. Dispositif de terrain de la technique d'automatisation, comprenant :
• un récipient (1) destiné à recevoir et/ou à guider un fluide,
le récipient (1) présentant une surface extérieure (2) ;
• un dispositif de mesure (3) destiné à déterminer une variable de procédé du fluide ;
• des composants électroniques (4) destinés au fonctionnement du dispositif de mesure (3) ;
• un boîtier (5) destiné à protéger le dispositif de mesure (3) et les composants électroniques (4),
le boîtier (5) comprenant un corps de boîtier (6),
le dispositif de mesure (3) et les composants électroniques (4) étant disposés dans le boîtier (5),
le corps de boîtier (6) étant disposé sur la surface extérieure (2),
le corps de boîtier (6) comprenant au moins partiellement un matériau composite,
le dispositif de mesure (3) et les composants électroniques (4) étant au moins partiellement entourés par le matériau composite,
le matériau composite comprenant une matrice polymère,
le matériau composite comprenant un additif configuré pour établir une adhérence améliorée entre le récipient (1) et le corps de boîtier (6),
l'additif comprenant au moins un composé chimique contenant un métal de transition oxydé, de préférence de la colonne 4 du tableau périodique.

2. Dispositif de terrain selon la revendication 1,
dans lequel la surface extérieure (2) comprend une polyoléfine.

3. Dispositif de terrain selon la revendication 1 et/ou 2,
dans lequel le récipient (1) est un tube en PE.

4. Dispositif de terrain selon au moins l'une des revendications précédentes,
dans lequel la matrice polymère comprend au moins un premier composant et un second composant,
le premier composant comprenant un isocyanate,
le second composant comprenant un polyol.

5. Dispositif de terrain selon au moins l'une des revendications précédentes,
dans lequel le métal de transition est choisi parmi le groupe comprenant le titane et/ou le zirconium.

6. Dispositif de terrain selon au moins l'une des revendications précédentes,
dans lequel le composé chimique comprend un titanate et/ou un zirconate.

7. Dispositif de terrain selon la revendication 6,
dans lequel le composé chimique comprend une chaîne isopropyle et/ou une chaîne tri(dioctyl)phosphate.

8. Dispositif de terrain selon au moins l'une des revendications précédentes,
dans lequel le dispositif de terrain est un débitmètre, en particulier un débitmètre électromagnétique.

9. Procédé de fabrication d'un boîtier (5) pour un dispositif de terrain, en particulier un dispositif de terrain selon au moins l'une des revendications précédentes, comprenant les étapes suivantes :
• incorporation d'un additif destiné à améliorer l'adhérence entre le récipient (1) et le corps de boîtier (6) du boîtier (5) dans un premier composant ou un second composant, de préférence dans le second composant d'un matériau de coulage,
le premier composant comprenant un isocyanate,
le second composant comprenant un polyol,
l'additif comprenant un composé chimique contenant un métal de transition oxydé, de préférence de la colonne 4 du tableau périodique ;
• mélange des différents composants afin de former le matériau de coulage ;
• coulée du matériau de coulage dans un moule de coulage,
le moule de coulage étant disposé sur une surface extérieure (2) du récipient (1) ; et
• durcissement du matériau de coulage afin de former le matériau composite à une température de durcissement.

10. Procédé selon la revendication 9,
dans lequel la température de durcissement est inférieure à 50 °C, en particulier inférieure à 40 °C et de préférence inférieure à 30 °C.

11. Procédé selon la revendication 9 et/ou 10,
dans lequel l'additif est présent dans le second composant dans un rapport pondéral d'au moins 0,3 %, en particulier d'au plus 1 % et de préférence de 0,4 à 0,5 %.

12. Procédé selon l'une des revendications 9 à 11,
dans lequel la surface extérieure (2) est oxydée à une position prévue pour le boîtier (5).

13. Procédé selon au moins l'une des revendications 9 à 12,
dans lequel le métal de transition est choisi parmi le groupe comprenant le titane ou le zirconium.

14. Procédé selon au moins l'une des revendications 9 à 13,
dans lequel l'additif comprend un titanate et/ou un zirconate, et/ou
dans lequel l'additif comprend un composé chimique comportant une chaîne isopropyle et/ou une chaîne tri(dioctyl)phosphate.

15. Utilisation d'un additif comprenant un titanate et/ou un zirconate pour améliorer l'adhérence d'un corps de boîtier (6) formé en polyuréthane sur un récipient (1).
